Europäisches Patentamt

European Patent Office

Office européen des brevets

(19)

(11) Veröffentlichungsnummer: **0 1 1 4 6 3 1**
**B1**

# (12) EUROPÄISCHE PATENTSCHRIFT

(45) Veröffentlichungstag der Patentschrift:
**22.04.87**

(21) Anmeldenummer: **84100392.4**

(22) Anmeldetag: **16.01.84**

(51) Int. Cl.⁴: **G 11 B 23/02,** B 65 D 85/57

(54) Aufbewahrungskassette für zwei und mehr plattenförmige Informationsträger hoher Speicherdichte.

(30) Priorität: **19.01.83 DE 3301644**

(43) Veröffentlichungstag der Anmeldung:
**01.08.84 Patentblatt 84/31**

(45) Bekanntmachung des Hinweises auf die Patenterteilung:
**22.04.87 Patentblatt 87/17**

(84) Benannte Vertragsstaaten:
**AT BE CH DE FR GB IT LI LU NL SE**

(56) Entgegenhaltungen:
**EP - A - 0 022 652**
**GB - A - 2 091 219**
**US - A - 3 109 539**
**US - A - 3 949 872**

**Philps tech. Rev. 40, 1982, No. 6, S. 180**

(73) Patentinhaber: **POLYGRAM GmbH,**
**Glockengiesserwall 3, D-2000 Hamburg 1 (DE)**

(72) Erfinder: **Nusselder, Frederik Bernhard, Koningslaan 19,**
**NL-1405 GH Bussum (NL)**

(74) Vertreter: **Meier, Friedrich, Dipl.-Ing. et al,**
**Billstrasse 80 Postfach 10 51 49,**
**D-2000 Hamburg 28 (DE)**

**Beschreibung**

Die Erfindung bezieht sich auf eine Aufbewahrungskassette, bestehend aus wenigstens einem flachen kastenförmigen Bodenteil, wobei zur Aufbewahrung von plattenförmigen Informationsträgern hoher Speicherdichte, insbesondere Digitalschallplatten, der Boden des Bodenteils für eine Lagerung des Informationsträgers ausschliesslich im von Informationsspuren freien Mittenbereich eine gegenüber der eigentlichen Bodenfläche erhöhte Auflage mit einer zentralen Zapfenanordnung aufweist und bei dem die dem Mittellochdurchmesser des Informationsträgers angepasste Zapfenanordnung im abgelegten Zustand des Informationsträgers in dessen Mittelloch eingreift und diesen festklemmt.

Bei solchen Aufbewahrungskassetten für optisch auslesbare Videoplatten oder optisch auslesbare digitale Schallplatten werden hohe Ansprüche an deren Eigenschaften gestellt. Die Aufbewahrungskassetten müssen nicht nur einen gewissen Schutz gegen äussere Einflüsse bieten, sondern auch die plattenförmigen Informationsträger so aufbewahren, dass sich evtl. Verwindung der Aufbewahrungskassette nicht auf den plattenförmigen Informationsträger überträgt und dass dieser in der Aufbewahrungskassette möglichst spannungsfrei gelagert ist.

Aus der DE-OS 32 05 478 (Offenlegungstag 25.8.83) und Philips tech. Rev. 40, 1982 Nov. S. 180 ist eine Aufbewahrungskassette für je einen plattenförmigen Informationsträger bekannt, bei der der plattenförmige Informationsträger im eingelegten Zustand an einer Zapfenordnung festgeklemmt ist und lediglich in einer zentralen, gegenüber der eigentlichen Bodenfläche erhöhten Auflage auf dem Bodenteil aufliegt. Auf diese Weise kann sich eine Verwindung der Aufbewahrungskassette nicht auf den plattenförmigen Informationsträger übertragen.

Zur Aufbewahrung mehrerer plattenförmiger Informationsträger ist aus der EP-A 22 652 eine Kassette zur Aufbewahrung mehrerer plattenförmiger Informationsträger bekannt, bei der die zu lagernden plattenförmigen Informationsträger jeweils zwischen zwei Platten eingeklemmt werden. Die Platten liegen dabei sowohl in ihrem mittleren Bereich wie auch in ihren äusseren Randbereichen auf beiden Platten der Aufbewahrungskassette auf. Je nach Anzahl der aufzunehmenden plattenförmigen Informationsträger wird eine entsprechende Anzahl von Platten, zwischen die die Informationsträger eingeklemmt werden, vorgesehen.

Es ist Aufgabe der Erfindung, eine Aufbewahrungskassette für zwei oder mehr plattenförmige Informationsträger zu schaffen, welche eine verwindungsfreie Lagerung der Informationsträger gewährleistet und darüber hinaus gegebenenfalls auch die Aufnahme von Text-Beilageheften gestattet.

Die Aufgabe wird erfindungsgemäss, ausgehend von einer Aufbewahrungskassette der eingangs genannten Art, dadurch gelöst, dass ein

– kastenförmiges Mittelteil mit einem Zwischenboden und an der Ober- und Unterseite des Mittelteils jeweils ein an diesem einseitig in einem Scharnier gehaltertes kastenförmiges Bodenteil vorgesehen ist,

– der Zwischenboden beidseitig mit einer Auflage und einer Zapfenanordnung versehbar ist, so dass entweder ein plattenförmiger Informationsträger auf den Zapfenanordnungen festklemmbar ist oder eine Textbeilage einlegbar ist,

– an den Zapfenanordnungen des Zwischenbodens festgeklemmte plattenförmige Informationsträger auch bei zugeklappten Bodenteilen lediglich im Bereich der erhöhten Auflage der Zapfenanordnungen den Zwischenboden berühren und ansonsten freiliegen.

Eine solche Aufbewahrungskassette kann in ihren beiden Bodenteilen je einen plattenförmigen Informationsträger aufnehmen. Darüber hinaus kann auf beiden Seiten des Zwischenbodens je ein weiterer solche Informationsträger aufgenommen werden. Es ist jedoch auch möglich, auf eine oder auch auf beide Seiten des Zwischenbodens je eine Textbeilage einzulegen. Aufgrund der Variabilität dieser Aufbewahrungskassetten wird für zwei, drei oder vier plattenförmige Informationsträger nur noch ein Typ von Kassette benötigt. Dennoch ist in jedem Fall gewährleistet, dass die plattenförmigen Informationsträger in der Kassette so gelagert sind, dass sich ein Verzug der Kassette nicht auf die Informationsträger überträgt, da diese auch bei zugeklappten Bodenteilen lediglich im zentral angeordneten Bereich der erhöhten Auflage das Bodenteil bzw. den Zwischenboden berühren und ansonsten freiliegen.

Vorteilhafte Ausgestaltungen der Erfindung sind in den weiteren Patentansprüchen 2 bis 7 angegeben.

In der Zeichnung bedeuten

Fig. 1 eine Aufbewahrungskassette für die Aufnahme von vier Platten in perspektivischer Sicht,

Fig. 2 eine Schnittdarstellung einer Aufbewahrungskassette für zwei Platten und ein Textbuch,

Fig. 3 eine Schnittdarstellung einer Aufbewahrungskassette für drei Platten une ein Textbuch,

Fig. 4 eine Schnittdarstellung einer Aufbewahrungskassette für vier Platten entsprechend Fig.1.

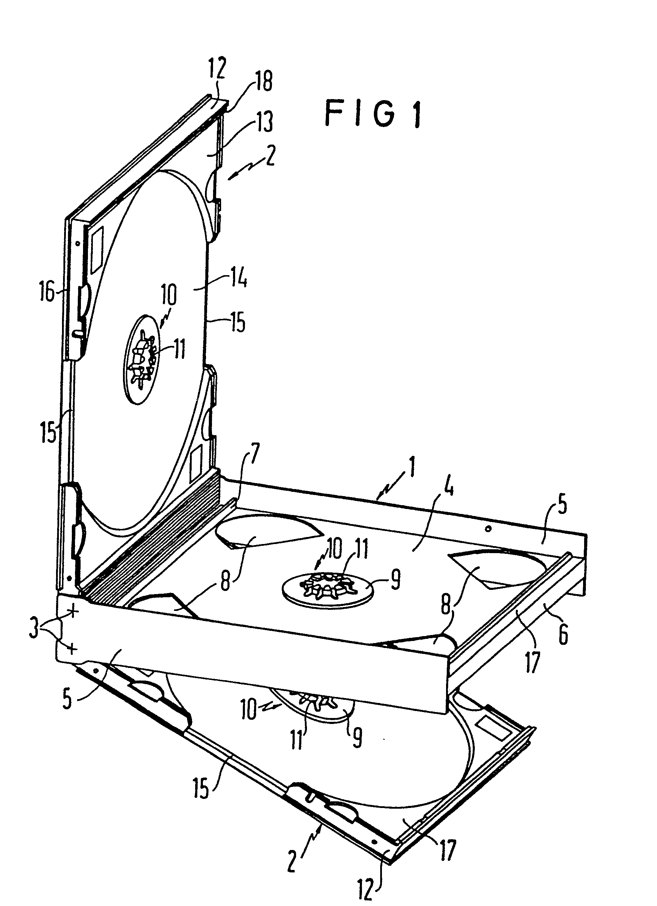

Die Aufnahmekassette nach Fig. 1 besteht aus dem kastenförmigen Mittelteil 1 und zwei Deckel darstellenden kastenförmigen Bodenteilen 2, die aufklappbar in Scharnieren 3 an der Rückseite des kastenförmigen Mittelteils 1 gehaltert sind.

Das kastenförmige Mittelteil 1 weist einen Zwischenboden 4 auf, der in Erstreckung von hinten nach vorn auf beiden Seiten Seitenteile 5 aufweist. An der Vorderseite ist das kastenförmige Mittelteil 1 durch die Profilleiste 6 begrenzt, die jedoch diesen gegenüber eine niedrigere Höhe aufweist. Auf der Rückseite ist das kastenförmige Mittelteil 1 ebenfalls mit einer Profilleiste 7 versehen, die die gleiche Höhe wie die vordere Profilleiste 6 hat. Auf der Rückseite stehen jedoch die Seitenteile 5 über die Profilleiste 7 zur Gestaltung der Scharnierlager für die kastenförmigen Bodenteile 2 über. Der Zwischenboden 4 schliesslich weist in den Eckenbereichen halbkreisförmige Öffnungen 8 auf, die einerseits eine Material- und Gewichtsersparnis bedeuten, darüber hinaus aber auch als Durchgriff zur anderen Seite dienen. Für die Halterung eines plattenförmigen Informationsträgers weist der Zwischenboden 4 auf beiden Seiten im zentralen Bereich eine kreisförmige, dem informationsfreien Mittelbereich der Platte angepasste erhöhte Auflage 9 auf, über der sich die Zapfenanordnung 10 erhebt. Die Zapfenanordnung 10 besteht hierbei aus mehreren federnden Segmentteilen 11. Beim Eingreifen der Zapfenanordnung 10 in das Mittelloch der auf der erhöhten Auflage 9 abzulegenden Platte haben diese federnden Zapfensegmente die Wirkung einer Federraste.

Die kastenförmigen Bodenteile 2 bestehen jeweils aus einer Bodenwanne 12 mit einem darin klemmbar eingesetzten Tablett 13, das eine kreisförmige Aufnahmewanne 14, mit darin zentral angeordneten Auflagehalterung für eine Platte, bestehend aus der erhöhten Auflage 9 und der Zapfenanordnung 10 mit ihren federnden Segmentteilen 11 aufweist. Auf einander gegenüberliegenden Seiten sind im Mittelbereich die Seitenwände sowohl der Bodenwanne 12 als auch des Tabletts 13 von einer Aussparung 15 unterbrochen, die hierbei der besseren Handhabung der Platte bei Ablegen bzw. Abnehmen von der erhöhten Auflage 9 dient.

Wie Fig. 1 ferner erkennen lässt, sind die Seitenwände der Bodenwanne 12 etwas abgesetzt und greifen beim Schliessen der Kassette in das Mittelteil 1 zwischen die Seitenteile 5 ein. Die Bodenkanten 16 der Bodenwannen 12 kommen dabei auf die Oberkante der Seitenteile 5 zu liegen. Weiterhin weist auch die vordere Profilleiste 6 auf beiden Seiten Auflageflächen 17 für die Stirnkanten 18 der vorderen Seitenteile der Bodenwannen 12 auf.

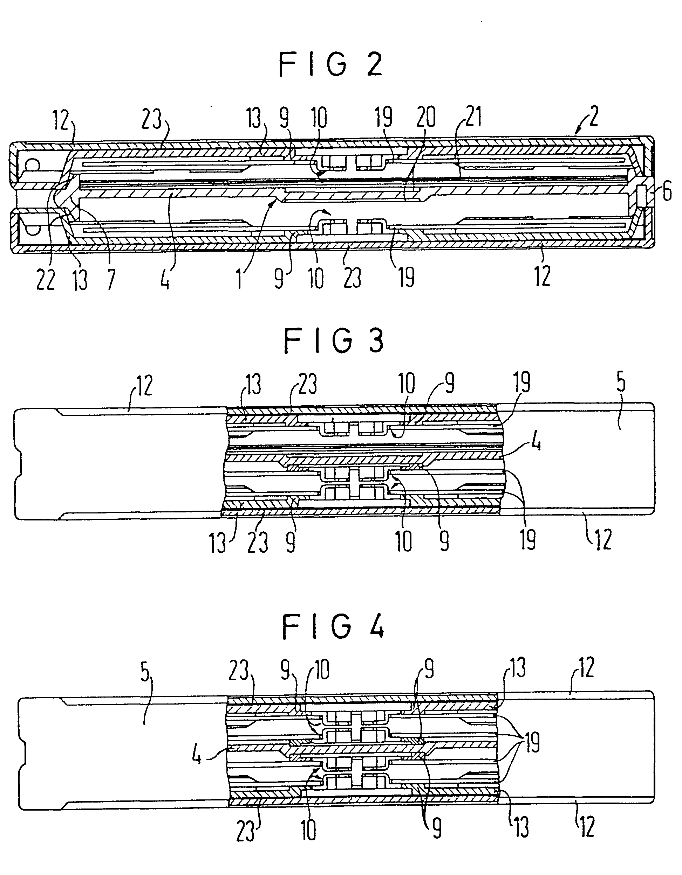

Die im Schnitt dargestellte Aufbewahrungskassette nach Fig. 2 unterscheidet sich von der Aufbewahrungskassette nach Fig. 1 lediglich darin, dass der Zwischenboden 4 des kastenförmigen Mittelteils 1 ohne die erhöhte Auflage mit der Zapfenanordnung ausgeführt ist, somit lediglich für die Aufnahme von zwei plattenförmigen Informationsträgern 19 vorgesehen ist. Der Zwischenboden 4 weist jedoch zur Vorbereitung für die Aufnahme solcher erhöhten Auflagen mit einer Zapfenanordnung auf beiden Seiten eine kreisförmige Aussparung 20 auf. Im vorliegenden Fall der Fig. 2 dient das kastenförmige Mittelteil auf der Oberseite zur Aufnahme eines Textheftes 21. Der dem Textheft 21 gegenüber angeordnete plattenförmige Informationsträger 19 kann von diesem Textheft, auch wenn es sich vom Zwischenboden 4 abheben sollte, nicht berührt werden, da es in diesem Falle nur auf der Stirnseite der Zapfenanordnung 10 sowie dem in den Ecken erhöhten Rand des Tabletts 13 aufliegen kann. Wie Fig. 2 ferner erkennen lässt, ist das Profil der hinteren Profilleiste 7 auf der Aussenseite so gestaltet, dass die kastenförmigen Bodenteile im vom Mittelteil 1 abgeklappten Zustand gegen die schräge Aussenkante 22 der Profilleiste 7 auflaufen und damit einen Anschlag für eine Drehwinkelbegrenzung vorfinden.

Die Schnittdarstellung nach Fig. 3 unterscheidet sich von der Schnittdarstellung nach Fig. 2 lediglich dadurch, dass der Zwischenboden 4 des kastenförmigen Mittelteils 1 auf der Unterseite zusätzlich für die Aufnahme eines dritten plattenförmigen Informationsträgers 19 dadurch vorgesehen ist, dass in die Aussparung 20 an der Unterseite des Zwischenbodens 4 eine erhöhte Auflage 9 mit einer Zapfenanordnung 10 eingelassen ist.

Die Schnittdarstellung nach Fig. 4 entspricht der Kassettenanordnung nach Fig. 1 für vier plattenförmige Informationsträger 19. Hier ist also im Unterschied zur Kassettenausführungsform nach Fig. 3 auch in die obere kreisförmige Aussparung 20 des Zwischenbodens 4 eine erhöhte Auflage 9 mit Zapfenanordnung 10 eingelassen.

Wie die Schnittdarstellungen nach den Figuren 2 bis 4 ferner erkennen lassen, kann der Zwischenraum zwischen dem Tablett 13 und dem Wannenboden 12 der kastenförmigen Bodenteile 2 unabhängig davon, ob die Aufnahmekassette für zwei, drei oder vier plattenförmige Informationsträger 19 vorgesehen ist, für die Aufnahme einer Textbeilage verwendet werden. Zweckmässig wird die Textbeilage in Form eines Textblattes in den Boden einer Bodenwanne 12 eingeklebt. Die Information steht dann jeweils nach Herausnehmen des Tabletts 13 zur Verfügung.

## Patentansprüche

1. Aufbewahrungskassetten, bestehend aus wenigstens einem flachen kastenförmigen Bodenteil (2), wobei zur Aufbewahrung von plattenförmigen Informationsträgern (19) hoher Speicherdichte, insbesondere Digitalschallplatten, der Boden des Bodenteils für eine Lagerung des Informationsträgers ausschliesslich im von Informationsspuren freien Mittenbereich eine gegenüber der eigentlichen Bodenfläche erhöhte Auflage (9) mit einer zentralen Zapfenanordnung (10) aufweist und bei dem die dem Mittellochdurchmesser des Informationsträgers angepasste Zapfenanordnung im abgelegten Zustand des Informationsträgers in dessen Mittelloch eingreift und diesen festklemmt, dadurch gekennzeichnet, dass

- ein kastenförmiges Mittelteil (1) mit einem Zwischenboden (4) und an der Ober- und Unterseite des Mittelteils (1) jeweils ein an diesem einseitig in einem Scharnier (3) gehaltertes kastenförmiges Bodenteil (2) vorgesehen ist,

- der Zwischenboden (4) beidseitig mit einer Auflage (9) und einer Zapfenanordnung (10) versehbar ist, so dass entweder ein plattenförmiger Informationsträger auf den Zapfenanordnungen (10) festklemmbar ist oder eine Textbeilage (21) einlegbar ist,

– an den Zapfenanordnungen (10) des Zwischenbodens (4) festgeklemmte plattenförmige Informationsträger (19) auch bei zugeklappten Bodenteilen lediglich im Bereich der erhöhten Auflage (9) der Zapfenanordnungen (10) den Zwischenboden berühren und ansonsten freiliegen.

2. Aufbewahrungskassette nach Anspruch 1, dadurch gekennzeichnet, dass die Seitenwände eines kastenförmigen Bodenteils (2) hinsichtlich des Bodens geringfügig zur Bodenmitte hin abgesetzt und hiermit im geschlossenen Zustand der Kassette wenigstens auf seiten der senkrecht zur Scharnierachse angeordneten Seitenteile (5) des kastenförmigen Mittelteils (1) in dieses Mittelteil bis zum Anschlag an der überstehenden Bodenkante (16) eingreifen.

3. Aufbewahrungskassette nach Anspruch 1 oder 2, dadurch gekennzeichnet, dass das kastenförmige Mittelteil (1) auf zwei zueinander parallelen Seiten durch die Höhe der Kassette im wesentlichen festlegende Seitenteile (5) begrenzt ist, die hierzu in senkrechter Richtung durch in ihrer Höhe gegenüber diesen Seitenteilen reduzierte Profilleisten (6, 7) zu einem Kastenrahmen derart verbunden sind, dass die Seitenteile über die eine Profilleiste, und zwar die hintere Profilleiste (7), zur Gestaltung von Scharnierdrehlagern hinausragen, während sie mit der anderen Profilleiste, und zwar der vorderen Profilleiste (6), abschliessen, und dass die hintere Profilleiste für jedes Bodenteil im aufgeklappten Zustand einen Anschlag (22) und die vordere Profilleiste für beide Bodenteile im abgeklappten Zustand Auflagekanten aufweist, die hierbei mit den Stirnseiten (18) der vorderen Seitenwände der Bodenteile (2) fluchten.

4. Aufbewahrungskassette nach einem der vorhergehenden Ansprüche, dadurch gekennzeichnet, dass die Bodenteile (2) in den Eckbereichen, ausserhalb des eigentlichen, den plattenförmigen Informationsträger (19) aufnehmenden Teilraumes, den in der Zapfenanordnung auf der erhöhten Auflage (9) ruhenden plattenförmigen Informationsträger überragende Erhöhungen aufweisen.

5. Aufbewahrungskassette nach Anspruch 4, dadurch gekennzeichnet, dass die Stärke der Erhöhungen wenigstens annähernd gleich der Gesamtstärke aus der Höhe der Auflage (9) und der Höhe der darauf angeordneten Zapfenanordnung (10) ist.

6. Aufbewahrungskassette nach einem der vorhergehenden Ansprüche, dadurch gekennzeichnet, dass der Zwischenboden (4) des kastenförmigen Mittelteils (1) im Eckenbereich Öffnungen (8) aufweist, die so gestaltet sind, dass sie das Durchstecken eines Fingers gestatten.

7. Aufbewahrungskassette nach einem der vorhergehenden Ansprüche, dadurch gekennzeichnet, dass die die Deckel bildenden kastenförmigen Bodenteile (2) aus einer den eigentlichen Deckel bildenden Bodenwanne (12) und einem in die Bodenwanne einklemmbaren, die erhöhte Auflage (9) mit der Zapfenanordnung (10) aufnehmenden Tablett (13) bestehen.

**Claims**

1. A storage case comprising at least one flat box-shaped bottom section (2) whose bottom, for the storage of high-density disc-shaped information carriers, in particular digital audio discs, comprises a support (9) with a central peg means (10), which support is raised relative to the actual bottom surface and is adapted to support the information carrier exclusively in its central area which is free from information tracks, the peg means, which is adapted to the diameter of the centre hole of the information carrier, engaging the centre hole of the information carrier in the inserted condition of said carrier to retain said carrier, characterized in that

– there are provided a box-shaped mid section (2) comprising a partition (4) and both at the upper side and at the lower side of the mid section (1) a box-shaped bottom section (2) connected to said mid section by means of a hinge (3),

– the partition (4) can be provided with a support (9) and a peg means (10) on each side, so that either a disc-shaped information carrier can be clamped onto the peg means (10) or a leaflet (21) can be inserted,

– disc-shaped information carriers (19) clamped onto the peg means (10) of the partition (4) contact the partition only at the location of the raised support (9) of the peg means (10) and are further clear of said partition, also when the bottom sections are hinged down.

2. A storage case as claimed in Claim 1, characterized in that the side walls of a box-shaped bottom section (2) slightly recede relative to the bottom towards the bottom centre and in the closed condition of the case engage in the box-shaped mid-section (1) with at least the lateral wall portions (5) of said mid section which extend perpendicularly to the hinge axis and abut against the laterally protruding bottom edge (16).

3. A storage case as claimed in Claim 1 or 2, characterized in that at two mutually parallel sides the box-shaped mid section (1) is bounded by alteral wall portions (5) which in principle define the height of the storage case, which wall portions for this purpose are interconnected perpendicularly to form a box frame by means of profile members (6, 7) having a smaller height than said lateral wall portions, in such a way that the lateral wall portions extend beyond one profile member, namely the rear profile member (7), to form hinge pivots, and are flush with other profile member, namely the front profile member (6), and in that the rear profile member forms a stop (22) for each bottom section in the swung-up condition and the front profile member comprises supporting edges for both bottom sections in the swung-down condition, which edges are then flush with the front sides (18) of the front walls of the bottom sections (2).

4. A storage case as claimed in any one of the preceding Claims, characterized in that at the corners, outside the area which actually receives the disc-shaped information carrier (19), the bottom sections (2) comprise raised portions which extend beyond the disc-shaped information carrier which is supported by the peg mean on the raised support (9).

5. A storage case as claimed in Claim 4, characterized in that the height of the raised portions is at least substantially equal to the overall height of the support (9) the peg means (10) arranged on said support.

6. A storage case as claimed in any one of the preceding Claims, characterized in that the partition (4) of the box-shaped mid section (1) has openings (8) near the corners, which openings are shaped so as to allow insertion of a finger.

7. A storage case as claimed in any one of the preceding Claims, characterized in that the box-shaped bottom sections (2) constituting the covers comprise a bottom receptacle (12) forming the actual cover and a panel (13) which can be clamped into said receptacle and which receives the raised support (9) with the retaining means (10).

**Revendications**

1. Coffrets de rangement formés d'au moins une partie en forme de boîte plate (2), dans lesquels, pour le rangement de supports d'information en forme de disques (19) à haute densité d'enregistrement, en particulier des disques audionumériques, le fond de la partie de fond comporte, pour le soutien du support d'information, exclusivement dans la zone centrale du support exempte de pistes d'information, une pièce d'appui (9) surélevée par rapport à la surface du fond proprement dit avec un système de tenon central (10) et dans lesquels, lorsque le support d'information est posé en place, le système de tenon adapté au diamètre du trou central du support d'information s'engage dans le trou central de ce dernier et le cale, caractérisés en ce que
– il est prévu une partie médiane en forme de boîte (1) qui comporte un fond intermédiaire (4) et au-dessus et en-dessous de la partie médiane (1), chaque fois une partie de fond en forme de boîte (2) articulée d'un côté à cette partie médiane,
– le fond intermédiaire (4) peut être pourvu des deux côtés d'une pièce d'appui (9) et d'un système de tenon (10), de sorte qu'un support d'information en forme de disque peut être bloqué sur les systèmes de tenons (10) ou qu'un livret d'accompagnement (21) peut être déposé,
– des supports d'information en forme de disques (19) bloqués sur les systèmes de tenons (10) du fond intermédiaire (4) ne sont en contact avec le fond intermédiaire que dans la zone de la pièce d'appui surélevée (9) des systèmes de tenons (10), même lorsque les parties de fond sont rabattues en position de fermeture et sont sinon libres.

2. Coffret de rangement suivant la revendication 1, caractérisé en ce que les parois latérales d'une partie de fond en forme de boîtes (2) sont disposées par rapport au fond légèrement en retrait vers le centre de ce fond et s'engagent ainsi, dans l'état de fermeture du coffret, au moins par les bords des parties latérales (5) perpendiculaires à l'axe de pivotement de la partie médiane en forme de boîte (1) dans cette partie médiane jusqu'à venir en butée avec le bord saillant (16) du fond.

3. Coffret de rangement suivant la revendication 1 ou 2, caractérisé en ce que la partie médiane en forme de boîte (1) est délimitée, de deux côtés parallèles l'un à l'autre, par des parties latérales (5) définissant en substance la hauteur du coffret qui sont reliées à cet effet dans le sens vertical en formant un cadre de boîte par des bandes profilées (6, 7) de hauteur réduite par rapport à ces parties latérales d'une manière telle que les parties latérales s'étendent au delà d'une des bandes profilées et en particulier de la bande profilée postérieure (7) en vue de la formation des articulations de pivotement, tandis qu'elles se terminent par l'autre bande profilée et en particulier la bande profilée antérieure (6), et que la bande profilée postérieure pour chaque partie de fond présente, dans l'état d'ouverture, une butée (22) et la bande profilée antérieure pour les deux parties de fond, dans l'état fermé, des bords d'appui qui sont dans ce cas au niveau des côtés d'about (18) des parois latérales antérieures des parties de fond (2).

4. Coffret de rangement suivant l'une quelconque des revendications précédentes, caractérisé en ce que les parties de fond (2) comportent, dans les zones de coin, à l'extérieur de l'espace partiel recevant effectivement les supports d'information en forme de disques (19), les surélévations qui font saillie sur le support d'information en forme de disque reposant dans le système de tenon sur la pièce d'appui surélevée (9).

5. Coffret de rangement suivant la revendication 4, caractérisé en ce que l'épaisseur des surélévations est au moins à peu près égale à l'épaisseur totale correspondant à la hauteur de la pièce d'appui (9) et à la hauteur du système de tenon (10) disposé sur cette pièce d'appui.

6. Coffret de rangement suivant l'une quelconque des revendications précédentes, caractérisé en ce que le fond intermédiaire (4) de la partie médiane en forme de boîte (1) présente dans les zones de coins, des ouvertures (8) qui sont conformées de manière à permettre le passage d'un doigt.

7. Coffret de rangement suivant l'une quelconque des revendications précédentes, caractérisé en ce que les parties de fond en forme de boîtes (2) formant les couvercles sont formées d'une cuvette de fond (12) formant le couvercle proprement dit et d'une plage (13) pouvant être serrée dans la cuvette de fond et recevant la pièce d'appui surélevée (9) avec le système de tenon (10).

F I G 1

# F I G 2

# F I G 3

# F I G 4